# EUROPEAN PATENT SPECIFICATION

(11) **EP 1 895 668 B1**
(45) Date of publication and mention of the grant of the patent: **11.11.2009**
(21) Application number: 06017859.7
(22) Date of filing: 28.08.2006
(51) Int. Cl.: H04B 1/18

(54) **A low noise amplifier for an electrically small antenna**
Ein raucharmer Eingangsverstärker für eine elektrische kleine Antenne
Un amplificateur de réception à bruit faible pour une électriquement petite antenne

(43) Date of publication of application: 05.03.2008
(73) Proprietor: Laird Technologies AB, 184 25 Åkersberga (SE)
(72) Inventor: Kaikkonen, Andrei, 164 71 Kista (SE); Lindberg, Peter, 752 29 Uppsala (SE)
(74) Representative: Estreen, Lars J.F.

(56) References cited:
- DE-A1-102004 020 222
- JP-A- 3 210 824
- US-A- 4 635 005
- US-A1- 2006 135 061

## Description

### FIELD OF INVENTION

The present invention relates generally to low noise amplifiers, and particularly to a low noise amplifier (LNA) for an electrically small antenna.

### BACKGROUND

A current trend for portable radio communication devices, such as mobile phones, PDA, portable computers and similar devices, is to provide the device with a DVB-H (Digital Video Broadcasting: Handhelds) receiver. This is in addition to other components for which the available space of the device is already limited.

One way of minimizing use of the space of a device is to use an electrically small antenna, which however reduces the quality of signals received at a DVB-H receiver. An electrically small antenna has an electrical size which is much smaller than wavelength corresponding to its intended resonance frequency/frequencies.

DE 10 2004 020222 discloses a low noise amplifier arrangement for DVB-H signals, having gain adjusting means to supress out-of-band signals.

### SUMMARY OF THE INVENTION

An object of the present invention is to improve the quality of signals received at a DVB-H receiver.

This object, among others, is according to the present invention attained by a low noise amplifier arrangement, an antenna arrangement, a DVB-H receiver arrangement, a portable radio communication device, and a method for processing DVB-H signals, respectively, as defined by the appended claims.

By providing impedance matching and gain equalization of DVB-H signals amplified by an LNA the quality of signals is improved, despite lowered gain of the combined LNA and equalizer, since saturation of a DVB-H receiver is avoided.

Further features and advantages of the present invention will be evident from the following description.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:
Fig. 1 schematically shows the receiving parts of a portable radio communication device up to a DVB-H receiver arrangement;
Fig. 2 schematically shows a radio frequency equivalent scheme for an electrically small antenna and a low noise amplifier having a grounded input transistor;
Fig. 3 schematically shows a low noise amplifier arrangement comprising a low noise amplifier and an equalizer;
Fig. 4 schematically shows a series equalizer between a DVB-H receiver and a low noise amplifier;
Fig. 5 schematically shows a parallel equalizer between a DVB-H receiver and a low noise amplifier; and
Fig. 6 schematically shows a parallel and a series equalizer between a DVB-H receiver and a low noise amplifier.

### DETAILED DESCRIPTION OF EMBODIMENTS

In the following description, for purpose of explanation and not limitation, specific details are set forth, such as particular techniques and applications in order to provide a thorough understanding of the present invention. However, it will be apparent for a person skilled in the art that the present invention may be practiced in other embodiments that depart from these specific details. In other instances, detailed description of well-known methods and apparatuses are omitted so as not to obscure the description of the present invention with unnecessary details.

Only the components and functions up to the DVB-H receiver will be discussed in connection with the present invention, since other processing to a DVB-H signal is independent of that of the present invention.

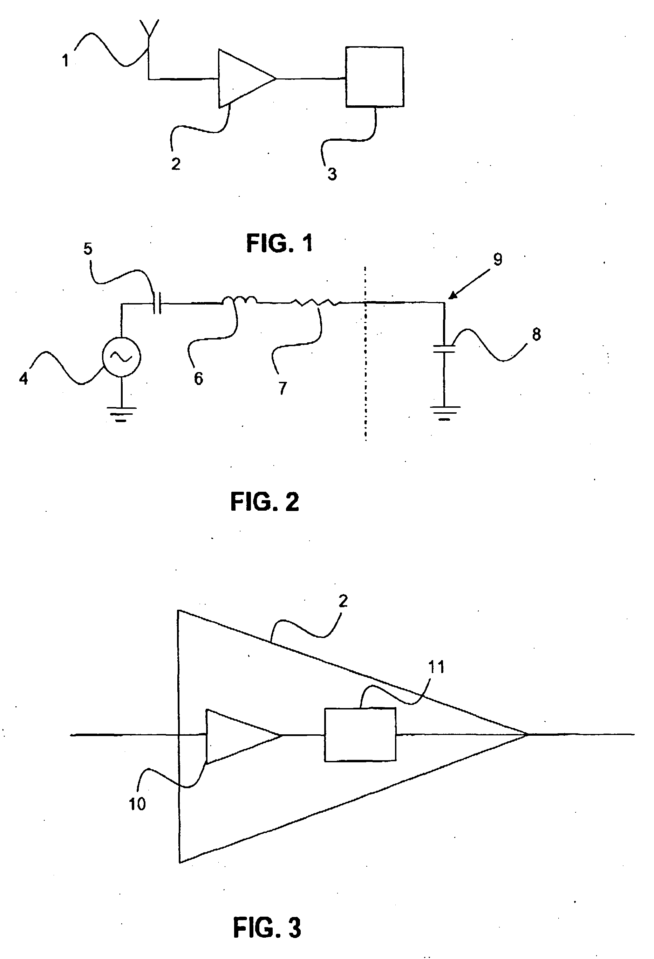

A preferred embodiment of the present invention will now be described with reference to Figs. 1-6.

A low noise amplifier arrangement 2 is provided between a DVB-H receiver 3 and an electrically small antenna 1, which is illustrated in Fig. 1. The low noise amplifier arrangement 2 is arranged to amplify DVB-H signals received from the electrically small antenna before they are received in the DVB-H receiver, in a portable radio communication device, such as a mobile phone, a computer or similar devices.

The electrically small antenna 1 is preferably tuned to the desired DVB-H frequencies together with the low noise amplifier arrangement 2. The low noise amplifier arrangement 2 in such a case has an input transistor connected to ground. At a resonance frequency the electrically small antenna 1 and the input transistor of the low noise amplifier arrangement 2 can be modeled by an equivalent scheme, which is illustrated in Fig. 2. The model comprises the electrically small antenna 1 modeled as a signal generator 4 followed by a capacitor 5 in series with an inductor 6. The model also comprises the input transistor of the low noise amplifier arrangement 2 modeled as a capacitor 8. Residual resistance is modeled by the resistor 7 in series between the inductor 6, which also can be an external lumped component, and the capacitor 8. The signal output from the low noise amplifier arrangement 2 is taken from point 9 of the model. In this way the electrically small antenna 1, together with the input of the low noise amplifier arrangement 2, can be tuned to λ/4 of the desired DVB-H frequencies when a ground plane is used, or can be tuned to λ/2 of the desired DVB-H frequencies when no ground plane is used, and will thus occupy less space in the portable radio communication device compared to an electrically large antenna.

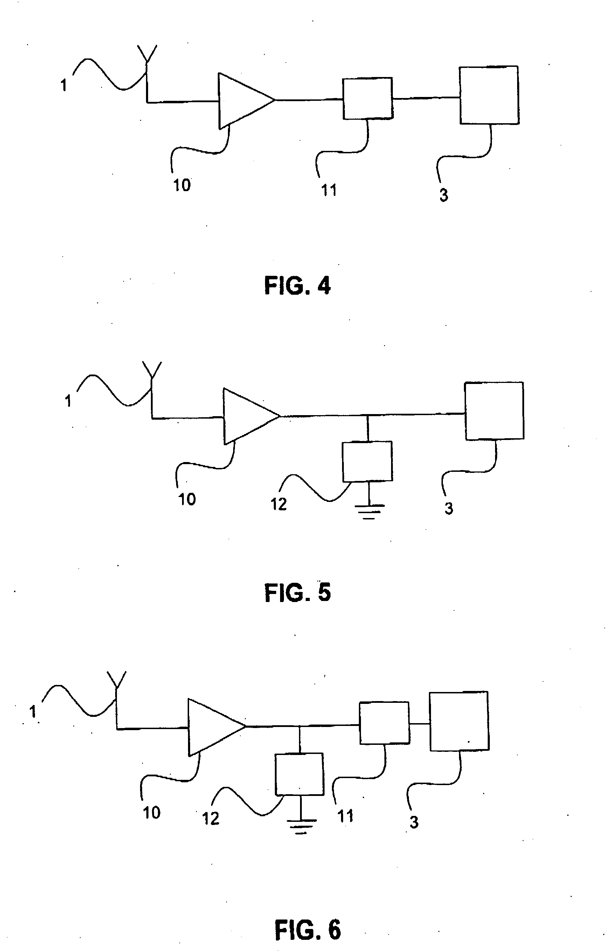

The low noise amplifier arrangement 2 comprises an LNA 10 at the input of the low noise amplifier arrangement 2 and an equalizer at the output of the low noise amplifier arrangement 2, which is illustrated in Fig. 3. The equalizer can e.g. be a series passive equalizer 11, which is illustrated in Fig. 4, a parallel passive equalizer 12, which is illustrated in Fig. 5, or an active equalizer (not illustrated).

A series passive equalizer 11 comprises a combination of passive components equal to a capacitor, an inductor, and a resistor in parallel, which are provided in between the low noise amplifier 10 and the DVB-H receiver 3. A parallel passive equalizer 12 comprises a combination of passive components equal to a capacitor, an inductor, and a resistor in series, which are provided between the low noise amplifier 10, the DVB-H receiver 3 and ground. An active equalizer comprises a plurality of component comprising transistors or similar, also provided between the low noise amplifier 10 and the DVB-H receiver 3. The equalizer can also easily be made of a combination of a series and a parallel passive equalizer, which is illustrated in Fig. 6. In addition to equalizer components can matching resistor be added, wherein a series matching resistor is used for a parallel equalizer, a parallel matching resistor is used for a series equalizer, and both a parallel and a series matching resistor is used for a combination of a series and a parallel passive equalizer.

A common low noise amplifier for DVB-H signals has a gain G of about 18 dB, and a gain variation ΔG of about 18 dB. By providing the low noise amplifier arrangement 2 with such a low noise amplifier followed by an equalizer a low noise amplifier arrangement with low ΔG is provided, and saturation of the DVB-H receiver 3 is avoided. By avoiding saturation of the DVB-H receiver 3 the quality of the signals is improved, and thus images displayed based on such signals also get improved quality. The low noise amplifier arrangement 2 has a gain variation ΔG of at most 6 dB, preferably at most 3 dB to avoid saturation of the DVB-H receiver. The low noise amplifier arrangement 2 will only get a gain G of at most 3 dB, preferably at most 0 dB, but the quality of the DVB-H signals are nevertheless improved.

The low noise amplifier arrangement 2 is further impedance matched to the subsequent DVB-H receiver 3. The impedance matching between the low noise amplifier arrangement 2 and the DVB-H receiver 3 is usually selected to 50 Ω, but could have other common impedances. The output impedance of the low noise amplifier arrangement 2, matching the input impedance of the DVB-H receiver 3, is provided by the equalizer, preferably by adding a resistor at its output, either as a series resistor or as a parallel resistor. This will provide an optimal noise figure (NF) in the DVB-H receiver 3 and the best input filter performance of the DVB-H receiver 3.

An antenna arrangement can be provided comprising the electrically small antenna 1 and the low noise amplifier arrangement 2. Alternatively, a DVB-H receiver arrangement can be provided comprising the DVB-H receiver 3 and the low noise amplifier arrangement 2. Also, a portable radio communication device, such as a mobile phone, computer or similar devices, can be provided comprising a DVB-H receiver 3, an electrically small antenna 1, and a low noise amplifier arrangement 2, wherein the low noise amplifier arrangement 2 can be provided as a separate unit, combined with the electrically small antenna 1, combined with the DVB-H receiver, or all three parts combined together.

A DVB-H signal is thus processed in the following way in a portable radio communication device. Firstly, DVB-H signals are received in an electrically small antenna. Thereafter, the received DVB-H signals are low noise amplified, the amplified signals are equalized and impedance matched, comprising impedance matching of the amplified signals to the subsequent DVB-H receiver and equalizing the gain variation of the amplified signals to at most 6 dB. Thereafter, the equalized and impedance matched signals are received in the subsequent DVB-H receiver.

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. A low noise amplifier arrangement (2), arranged to amplify DVB-H signals received from an electrically small antenna (1) in a portable radio communication device, **characterized in that** said low noise amplifier arrangement (2) comprises a low noise amplifier (10) and a gain equalizer (11, 12) as an output of said low noise amplifier arrangement (2), wherein said gain equalizer (11, 12) is arranged to impedance match said low noise amplifier arrangement (2) to a subsequent DVB-H receiver (3), and wherein said gain equalizer (11, 12) is arranged to equalize the gain variation of DVB-H signals of said low noise amplifier arrangement (2).

2. The low noise amplifier arrangement according to claim 1, wherein said gain equalizer is a parallel (12) or series (11) passive equalizer.

3. The low noise amplifier arrangement according to claim 2, wherein said gain equalizer is a parallel passive equalizer (12) and comprises a capacitor, an inductor and a resistor in series.

4. The low noise amplifier arrangement according to claim 2, wherein said gain equalizer is a series passive equalizer (11) and comprises a capacitor, an inductor and a resistor in parallel.

5. The low noise amplifier arrangement according to claims 1, wherein said gain equalizer is a combination of a parallel and a series passive equalizer (11, 12) and comprises a plurality of capacitors, inductors and resistors in series and parallel.

6. An antenna arrangement comprising an electrically small antenna, **characterized in that** it further comprises a low noise amplifier arrangement according to any of claims 1-5.

7. A DVB-H receiver arrangement comprising a DVB-H receiver, **characterized in that** it further comprises a low noise amplifier arrangement according to any of claims 1-5.

8. A portable radio communication device comprising a DVB-H receiver and an electrically small antenna, **characterized in that** it comprises a low noise amplifier arrangement according to any of claims 1-5.

9. A method for processing DVB-H signals in a portable radio communication device, **characterized by** the following steps:
receiving DVB-H signals in an electrically small antenna; thereafter
low noise amplifying said received DVB-H signals; and gain equalizing and impedance matching said amplified signals, comprising impedance matching of said amplified signals to a subsequent DVB-H receiver and gain equalizing the gain variation of DVB-H signals of said amplified signals; and thereafter
receiving said gain equalized and impedance matched signals in said subsequent DVB-H receiver.

## Patentansprüche

1. Rauscharme Verstärkeranordnung (2), angeordnet, um DVB-H-Signale, die von einer elektrisch kleinen Antenne (1) in einer tragbaren Funkkommunikationsvorrichtung empfangen werden, zu verstärken, **dadurch gekennzeichnet, dass** die rauscharme Verstärkeranordnung (2) einen rauscharmen Verstärker (10) und einen Verstärkungsentzerrer (11, 12) als Ausgang der rauscharmen Verstärkeranordnung (2) umfasst, wobei der Verstärkungsentzerrer (11, 12) angeordnet ist, eine Impedanzanpassung der rauscharmen Verstärkeranordnung (2) an einen nachfolgenden DVB-H-Empfänger (3) vorzunehmen, und wobei der Verstärkungsentzerrer (11, 12) angeordnet ist, die Verstärkungsschwankung von DVB-H-Signalen der rauscharmen Verstärkeranordnung (2) zu entzerren.

2. Rauscharme Verstärkeranordnung nach Anspruch 1, wobei der Verstärkungsentzerrer ein parallel (12) oder in Reihe (11) geschalteter passiver Entzerrer ist.

3. Rauscharme Verstärkeranordnung nach Anspruch 2, wobei der Verstärkungsentzerrer ein parallel geschalteter passiver Entzerrer (12) ist und einen Kondensator, einen Induktor und einen Widerstand umfasst, die in Reihe geschaltet sind.

4. Rauscharme Verstärkeranordnung nach Anspruch 2, wobei der Verstärkungsentzerrer ein in Reihe geschalteter passiver Entzerrer (11) ist und einen Kondensator, einen Induktor und einen Widerstand umfasst, die parallel geschaltet sind.

5. Rauscharme Verstärkeranordnung nach Anspruch 1, wobei der Verstärkungsentzerrer eine Kombination aus einem parallel geschalteten und einem in Reihe geschalteten passiven Entzerrer (11, 12) ist und eine Mehrzahl Kondensatoren, Induktoren und Widerstände umfasst, die in Reihe und parallel geschaltet sind.

6. Antennenanordnung, umfassend eine elektrisch kleine Antenne, **dadurch gekennzeichnet, dass** sie überdies eine rauscharme Verstärkeranordnung nach einem beliebigen der Ansprüche 1 bis 5 umfasst.

7. DVB-H-Empfängeranordnung, umfassend einen DVB-H-Empfänger, **dadurch gekennzeichnet, dass** sie überdies eine rauscharme Verstärkeranordnung nach einem beliebigen der Ansprüche 1 bis 5 umfasst.

8. Tragbare Funkkommunikationsvorrichtung, umfassend einen DVB-H-Empfänger und eine elektrisch kleine Antenne, **dadurch gekennzeichnet, dass** sie eine rauscharme Verstärkeranordnung nach einem beliebigen der Ansprüche 1 bis 5 umfasst.

9. Verfahren zum Verarbeiten von DVB-H-Signalen in einer tragbaren Funkkommunikationsvorrichtung, **gekennzeichnet durch** die folgenden Schritte:
Empfangen von DVB-H-Signalen in einer elektrisch kleinen Antenne; danach
rauscharmes Verstärken der empfangenen DVB-H-Signale; und
Verstärkungsentzerren und Impedanzanpassen der verstärkten Signale, umfassend eine Impedanzanpassung der verstärkten Signale an einen nachfolgenden DVB-H-Empfänger und Verstärkungsentzerren der Verstärkungsschwankung von DVB-H-Signalen der verstärkten Signale; und danach
Empfangen der verstärkungsentzerrten und impedanzangepassten Signale in dem nachfolgenden DVB-H-Empfänger.

## Revendications

1. Ensemble d'amplificateur de réception à bruit faible (2), arrangé pour amplifier des signaux DVB-H reçus d'une antenne électriquement petite (1) dans un dispositif portable de radiocommunication, **caractérisé en ce que** ledit ensemble d'amplificateur de réception à bruit faible (2) comprend un amplificateur à bruit faible (10) et un égaliseur de gain (11, 12) comme sortie dudit ensemble d'amplificateur de réception à bruit faible (2), dans lequel ledit égaliseur de gain (11, 12) est arrangé pour adapter les impédances dudit ensemble d'amplificateur de réception à bruit faible (2) à un récepteur DVB-H (3) subséquent, et dans lequel ledit égaliseur de gain (11, 12) est arrangé pour égaliser la variation de gain de signaux DVB-H dudit ensemble d'amplificateur de réception à bruit faible (2).

2. Ensemble d'amplificateur de réception à bruit faible selon la revendication 1, dans lequel ledit égaliseur de gain est un égaliseur passif en parallèle (12) ou en série (11).

3. Ensemble d'amplificateur de réception à bruit faible selon la revendication 2, dans lequel ledit égaliseur de gain est un égaliseur passif en parallèle (12) et comprend un condensateur, une bobine d'inductance et une résistance en série.

4. Ensemble d'amplificateur de réception à bruit faible selon la revendication 2, dans lequel ledit égaliseur de gain est un égaliseur passif en série (11) et comprend un condensateur, une bobine d'inductance et une résistance en parallèle.

5. Ensemble d'amplificateur de réception à bruit faible selon la revendication 1, dans lequel ledit égaliseur de gain est une combinaison d'un égaliseur passif en parallèle et un en série (11, 12) et comprend une pluralité de condensateurs, bobines d'inductance et résistances en série et en parallèle.

6. Ensemble d'antenne comprenant une antenne électriquement petite, **caractérisé en ce qu'**il comprend en outre un ensemble d'amplificateur de réception à bruit faible selon l'une quelconque des revendications 1-5.

7. Ensemble de récepteur DVB-H comprenant un récepteur DVB-H, **caractérisé en ce qu'**il comprend en outre un ensemble d'amplificateur de réception à bruit faible selon l'une quelconque des revendications 1-5.

8. Dispositif portable de radiocommunication comprenant un récepteur DVB-H et une antenne électriquement petite, **caractérisé en ce qu'**il comprend un ensemble d'amplificateur de réception à bruit faible selon l'une quelconque des revendications 1-5.

9. Procédé de traitement de signaux DVB-H dans un dispositif portable de radiocommunication, **caractérisé par** les étapes suivantes consistant à :
recevoir des signaux DVB-H dans une antenne électriquement petite ; puis
amplifier à bruit faible lesdits signaux DVB-H reçus ; et
égaliser le gain et adapter les impédances desdits signaux amplifiés, comprenant l'adaptation des impédances desdits signaux amplifiés à un récepteur DVB-H subséquent et égaliser le gain de la variation de gain de signaux DVB-H desdits signaux amplifiés ; et ensuite
recevoir lesdits signaux aux gain égalisé et impédances adaptées dans ledit récepteur DVB-H subséquent.
